# EUROPEAN PATENT APPLICATION

(11) **EP 4 131 485 A1**
(43) Date of publication of application: **08.02.2023**
(21) Application number: 20927634.4
(22) Date of filing: 18.12.2020
(51) Int. Cl.: H01M 4/36

(54) **POSITIVE ELECTRODE MATERIAL, PREPARATION METHOD THEREFOR, POSITIVE ELECTRODE, LITHIUM ION BATTERY AND VEHICLE**

(30) Priority: 27.03.2020 CN 202010230424
(71) Applicant: SVOLT ENERGY TECHNOLOGY CO., LTD, Changzhou, Jiangsu 213200 (CN)
(72) Inventor: ZHU, Jinxin, Changzhou, Jiangsu 213200 (CN); WANG, Pengfei, Changzhou, Jiangsu 213200 (CN)
(74) Representative: Casalonga
(86) International application number: PCT/CN2020/137771
(87) International publication number: WO 2021/189997

(57) **Abstract**

The present disclosure provides a cathode material and a method for preparing the cathode material, a cathode, a lithium ion battery and a vehicle. The cathode material comprises a matrix particle, wherein the matrix particle is a monocrystal particle comprising nickel lithium manganate and nickel cobalt lithium manganate. A position in the matrix particle close to a surface layer is provided with a buffer layer. A content of at least one of elements Ni, Co and Mn in the buffer layer is lower than contents thereof in other positions of the matrix particle. The cathode material has at least one of advantages of relatively high specific capacity, cycling stability, better safety performance and the like, and the buffer layer can alleviate erosion by an electrolyte and inhibit separation of active oxygen.

## Description

### Technical Field

The disclosure belongs to the technical field of materials, in particular to a cathode material and a method for preparing the cathode material, a cathode, a lithium ion battery and a vehicle.

### Background

With increasing improvement on popularization of green energy sources and requirements on energy safety and improvement on urban air quality, automobile electrification becomes an important development direction in the automobile industry. In recent years, although the power lithium ion battery market is increased rapidly, performance of current electric automobile remains to be improved, and endurance and safety problems are especially prominent. As far as the power lithium ion battery is concerned, the cathode material is an important factor to determine energy density and safety performance of the battery. In the current commercialized cathode material, nickel cobalt lithium manganate (LiNiₐCo_{b}Mn_{(1-a-b)}O₂, LNCM) is a relatively important ternary cathode material. The cathode material can be increased in specific capacity by high nickel, thereby meeting the requirement on high energy density of the battery. However, continuous increase of nickel content will cause problems of decline of stability of a crystal structure of a material, severe mixed arranging problem of lithium/nickel in a lattice, such that the cycle performance and the safety performance of the lithium ion battery are affected.

Therefore, it still has a room for improving the current cathode material, especially a nickel cobalt lithium manganate cathode material with high nickel content and a method for preparing the same, a cathode, a lithium ion battery and a vehicle.

### Summary

The present disclosure is made by the inventor based on discovery and cognition of the following truths and problems:

Although the cathode material in a monocrystal form can solve the problem of cycle performance caused by crystal boundary stress in a particle, the cathode material of the type still has problems that an electrolyte erodes the cathode material relatively severely, the material is poor in conductivity or an interface between the cathode material and the electrolyte is poor, the stability is poor and the like. Thus, if at least one of the problems is improved while the monocrystal structure of the cathode material can be kept, performance of a lithium cobaltous phosphate with the high nickel content is further improved to a great extent.

In one aspect of the present disclosure, the present disclosure provides a cathode material. The cathode material comprises a matrix particle, wherein the matrix particle is a monocrystal particle comprising nickel lithium manganate and nickel cobalt lithium manganate. A position in the matrix particle close to a surface layer is provided with a buffer layer. A content of at least one of elements Ni, Co and Mn in the buffer layer is lower than contents thereof in other positions of the matrix particle. The cathode material has at least one of advantages of relatively high specific capacity, cycling stability, better safety performance and the like, and a buffer layer can alleviate erosion by an electrolyte and inhibit separation of active oxygen.

According to the embodiments of the present disclosure, a chemical formula of a matrix of the cathode material is Li_{1+λ}NiₐMn_{β}Co_{y}M_{(1-α-β-γ)}O₂, wherein, 0≤λ<0.1, 0.8≤α<1, 0.01≤β<0.1, 0≤γ<0.1, 0.01≤1-α-β-λ≤0.05, M is selected from at least one of Al, Ti, Mg, Zr, Zn, Ce and Cr, N is selected from at least one of O, F, B and P, and a molar content of the element M in the buffer layer is higher than a molar content of the element M in a non-buffer layer. Thus, performance of the cathode material can be further improved.

According to the embodiments of the present disclosure, a chemical formula of a matrix of the cathode material is Li_{1+λ}NiₐMn_{β}Co_{y}M_{(1-α-β-γ)}O₂, wherein, 0≤λ<0.1, 0.8≤α<1, 0.01≤β<0.1, 0≤γ<0.1, M is selected from at least one of Al, Ti, Mg, Zr, Zn, Ce and Cr, N is selected from at least one of O, F, B and P, and a molar content of the element M in the buffer layer is higher than a molar content of the element M in a non-buffer layer. Thus, performance of the cathode material can be further improved.

According to the embodiments of the present disclosure, the cathode material further includes a coating layer, the coating layer covering a surface layer of the matrix particle, the coating layer being free of Li, Ni, Co and Mn, the coating layer being M'_{µ}Nᵥ, the M including any one or a combination of at least two of Al, Ti, Mg, Zr, Zn, Ce, Cr and B, N being any one or a combination of at least two of O, F, B and P, wherein, 1≤µ≤3, 1≤v≤6, and a type of M' in the coating layer is as same as a type of M in the matrix particle. Thus, performance of the cathode material can be further improved.

According to the embodiments of the present disclosure, M' includes any one or a combination of at least two of Al, Ti, Zr and Mg. Thus, performance of the cathode material can be further improved.

According to the embodiments of the present disclosure, the coating layer is at least one of AlF₃, TiO₂, Al₂O₃ and ZrO.

According to the embodiments of the present disclosure, a thickness of the coating layer is 10-100 nm. Thus, performance of the cathode material can be further improved.

According to the embodiments of the present disclosure, the chemical formula of the matrix particle is aLi_{1+λ}Ni_{α}Mn_{β}Co_{γ}M_{(1-α-β-γ)}O₂·bM_{µ}Nᵥ, wherein, a+b=1, 0<a<1, 0<b<1.

According to the embodiments of the present disclosure, the cathode material meets at least one of the following conditions: a particle size of the matrix particle is 0.2-10 microns, and a distance from the buffer layer to a surface layer of the matrix particle is 0.05-0.5 µm. Thus, performance of the cathode material can be further improved.

In another aspect of the present disclosure, the present disclosure provides a method for preparing the cathode material. The method includes: under a condition suitable for crystal growth of a precursor particle, independently injecting a precursor raw material comprising a metal salt solution and an alkaline solution into a closed reactor respectively to carry out coprecipitation to obtain the precursor particle; and mixing the precursor particle with a lithium salt and carrying out first calcining treatment to obtain the cathode material. The method is easy to operate, and the obtained cathode material has at least one of advantages of relatively high specific capacity, cycling stability, better safety performance and the like, and the buffer layer can alleviate erosion by an electrolyte and inhibit separation of active oxygen.

According to the embodiments of the present disclosure, the metal salt solution includes a salt solution of nickel, a salt solution of cobalt and a salt solution of manganese, and the precursor raw material includes an M salt solution. The method includes: after a first predetermined time, increasing an injection speed of the M salt solution and decreasing an injection speed of at least one of the salt solution of nickel, the salt solution of cobalt and the salt solution of manganese until an end of a crystal growth phase of the precursor particle, and then restoring the injection speeds of the metal salt solution and the M salt solution to an initial injection speed until the coprecipitation is finished, wherein M in the M salt comprises at least one of Al, Ti, Mg, Zr, Zn, Ce and Cr, and the first predetermined time is easier than the end of the crystal growth phase of the precursor particle. Thus, the precursor particle capable of forming the monocrystal particle can be obtained easily.

According to the embodiments of the present disclosure, the first predetermined time is a time when a granularity of the particle reaches 90-99% of a preset granularity of the precursor particle during the coprecipitation reaction. Thus, the precursor particle of the monocrystal particle can be formed better.

According to the embodiments of the present disclosure, the injection flow rates of the salt solution of nickel, the salt solution of cobalt and the salt solution of manganese are decreased independently to 30-50% of initial values of flow rates thereof, respectively. Thus, the precursor particle of the monocrystal particle can be formed better.

According to the embodiments of the present disclosure, the injection flow rate of the M salt solution is increased to 120-140% of an initial value of a flow rate, respectively. Thus, the precursor particle of the monocrystal particle can be formed better.

According to the embodiments of the present disclosure, the method further includes filtering, washing and drying a reaction product after the coprecipitation is finished.

According to the embodiments of the present disclosure, a granularity of the precursor is 1-8 µm. Thus, the precursor particle of the monocrystal particle can be formed better.

According to the embodiments of the present disclosure, the specific surface area of the precursor is 5-25 m²/g. Thus, the precursor particle of the monocrystal particle can be formed better.

According to the embodiments of the present disclosure, a tap density of the precursor is 1.1-1.9 g/cc. Thus, the precursor particle of the monocrystal particle can be formed better.

According to the embodiments of the present disclosure, the method further includes: mixing the cathode material with a coating agent to carry out second calcining treatment to form the coating layer, the coating agent meeting at least one of the following conditions: the coating agent includes at least one of aluminum isopropoxide, aluminum fluoride, aluminum oxide, cerium oxide, isopropyl titanate, titanium oxide, boron oxide, boric acid, magnesium oxide, zirconium oxide, zirconium n-butoxide, ammonium fluoride, ammonium dihydrogen fluoride, ammonium monohydrogen fluoride and magnesium metaborate; and a particle size of the coating agent does not exceed 50 nm. Thus, performance of the finally obtained cathode material can be further improved.

In one aspect of the present disclosure, the present disclosure provides a cathode. The cathode includes a cathode pole piece and a cathode material distributed on the cathode pole piece, the cathode material being the cathode material according to any one of claims 1-6 or being prepared by the method. The cathode has all characteristics and advantages of the above-mentioned cathode material and no more detailed description is provided herein. In general, the cathode has at least one of advantages of high stability of a cathode active material, and relatively high specific capacity, good cycle performance, better stability and the like of the lithium ion battery prepared by the cathode.

In yet another aspect of the present disclosure, the present disclosure provides a lithium ion battery. The lithium ion battery includes the above-mentioned cathode and anode as well as a diaphragm insulating the cathode with the anode. The lithium ion battery has all characteristics and advantages of the above-mentioned cathode, and no more detailed description is provided herein. In general, the lithium ion battery has at least one of advantages of relatively high specific capacity, good cycle performance, better stability and the like.

In one aspect of the present disclosure, the present disclosure provides a vehicle. The vehicle includes the above-mentioned lithium ion battery. Therefore, the vehicle has all characteristics and advantages of the above-mentioned lithium ion battery, and no more detailed description is provided herein. In general, the vehicle has at least one of advantages of relatively high mileage, better safety performance and stability, relatively small mileage attenuation and the like.

### Brief Description of the Drawings

The aspects and advantages and/or additional ones of the present disclosure become obvious and easy to understand in description of the embodiments in combination with drawings below, wherein
Fig. 1 shows a structural schematic diagram of the cathode material according to one embodiment of the present disclosure;
Fig. 2 shows a structural schematic diagram of the cathode material according to another embodiment of the present disclosure;
Fig. 3 shows a structural schematic diagram of the cathode according to another embodiment of the present disclosure;
Fig. 4 shows a flow schematic diagram of the method for preparing the cathode material according to an embodiment of the present disclosure;
Fig. 5 shows a scanning electron microscope picture of the cathode material according to embodiment 1 to embodiment 4 of the present disclosure;
Fig. 6 shows a scanning electron microscope picture of the cathode material according to the comparative example 1 of the present disclosure;
Fig. 7 shows a scanning electron microscope picture of the cathode material according to the comparative example 2 of the present disclosure;
Fig. 8 shows a first time charge and discharge curve of the cathode material according to embodiment 1 to embodiment 4 of the present disclosure;
Fig. 9 shows a specific discharge capacity curve of the cathode material at different current densities according to embodiment 1 to embodiment 4 of the present disclosure;
Fig. 10 shows a cycle curve of the specific discharge capacity of the cathode material according to embodiment 1 to embodiment 4 of the present disclosure in 50 cycle processes.

### Detailed Description of the Embodiments

Detailed description is made on the embodiments of the present disclosure below. Examples of the embodiments are shown in the drawing. In the absence of conflict, the embodiments of the present disclosure and features in the embodiments can be combined with one another. The embodiments described with reference to the drawings below are exemplary, and are merely used for explaining the present disclosure and are not construed as limitation to the present disclosure.

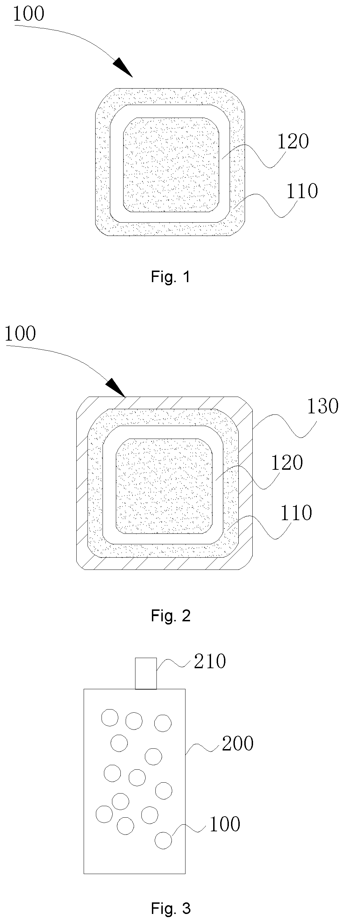

In one aspect of the present disclosure, the present disclosure provides a cathode material. With reference to Fig.1, the cathode material 100 includes a matrix particle 110 formed by a monocrystal particle. A position in the matrix particle 110 close to a surface layer is provided with a buffer layer 120. A content of at least one of elements Ni, Co and Mn in the buffer layer is lower than contents thereof in other positions of the matrix particle. The cathode material has at least one of advantages of relatively high specific capacity, cycling stability, better safety performance and the like, and the buffer layer can alleviate erosion by an electrolyte and inhibit separation of active oxygen. According to the embodiments of the present disclosure, a chemical formula of the matrix particle can be aLi_{1+λ}Ni_{α}Mn_{β}Co_{γ}M_{(1-α-β-γ)}O₂, wherein, a+b=1, 0<a<1, 0<b< 1, 0≤λ<0.1, 0.5≤α<1, 0.3≤β<1, 0≤γ<0.2, 0.01≤1-α-β-γ≤0.05. M is selected from at least one of Al, Ti, Mg, Zr, Zn, Ce and Cr, N is selected from at least one of O, F, B and P; and a molar content of the element M in the buffer layer is higher than a molar content in a non-buffer layer. According to the embodiments of the present disclosure, the chemical formula of the matrix particle further can meet a condition: 0≤λ<0.1, 0.8≤α<1, 0.01≤β<0.1, 0<y<0.1.

The cathode material can be an LNCM material with a high nickel content and has an M-doped element. M can be one or more of Al, Ti, Mg, Zr, Zn, Ce and Cr, for example, two, three or more than three M metals. Similarly, the cathode material further has one or more non-metal N elements, and N is selected from at least one of O, F, B and P, for example, one, two or more than two N elements. It should be particularly noted that the content of the M-doped element in the cathode material provided by the present disclosure can be relatively high, for example, when M is Al, the content of Al in the cathode material can exceed 1% (atomic ratio).

The specific structure of the cathode material and the principle capable of gaining beneficial effects are described below according to the specific embodiments of the present disclosure, the embodiments below are merely used for explaining and describing the present disclosure and are not construed to limit the present disclosure. For example, the structure shown in the Fig. 1 is merely used for describing a relative position relationship of the matrix particle 110 and the buffer layer 120 conveniently and cannot be construed as limitation to the shape of the cathode material particle.

The particle in the monocrystal form can include nickel lithium manganate and nickel cobalt lithium manganate materials. The buffer layer 120 is located in the position of the matrix particle close to the surface layer. The chemical composition of the buffer layer 120 is different from that in other positions of the matrix particle, for example, the chemical composition in a center position of the matrix particle is different from that on the surface layer on the outer side of the buffer layer. Specifically, the content of at least one of Ni, Co and Mn in the buffer layer 120 is relatively low, and the matrix particle contains other elements. For example, the content of M is relatively high, in particular, the contents of elements such as Al, Ti, Mg, Zr, Zn, Ce, Cr, B and the like are relatively high.

According to the embodiments of the present disclosure, the cathode material can have a certain particle size. According to some examples of the present disclosure, the particle size of at least 80% of matrix particles is in a range of 1.5-10 microns, a thickness of the buffer layer can be not greater than 200 nm, and the buffer layer can be located in a near surface layer range 0.05-0.5 micron away from the outer surface of the matrix particle. Therefore, the cathode material can be in a relatively proper dimensional range integrally and the thickness of the buffer layer outside the matrix particle is moderate. A situation that the buffer layer which is too thin cannot play a role is avoided and negative effects such as reduction of migration rate of lithium ions as the buffer layer is too thick are avoided. For example, the buffer layer is too thick, which may affect migration and diffusion rates of lithium ions. The lithium ions are excessive in resistance as the buffer layer is too thick as a large current is laid down. The thickness of the buffer layer can be specifically 40-60 nm. Those skilled in the art is acquainted that the cathode material is usually a micron order particle and is composed of a plurality of particles of the structure. Therefore, the particle size of the structures such as the cathode material or the matrix particle is an average particle size of the cathode material or a particle size range of most particles among a plurality of particles included in the structures such as the cathode material, for example, the particle size range of over 50% or over 80% or over 90% of particles. Therefore, the particle size of a part of cathode material can be greater than or smaller than the range, for example, the particle size of the cathode material can be within a range of 0.5-13 microns, and there can be particles with the particle sizes greater than 10 microns and less than 12.5 microns in the matrix particle 100.

According to the embodiments of the present disclosure, referring to the Fig. 2, the cathode material further can include the coating layer 130. The coating layer 130 can cover the surface layer of the matrix particle 110. As previously mentioned, the matrix particle 110 of the cathode material can be formed by monocrystal particles of nickel lithium manganate or nickel cobalt lithium manganate. According to the embodiments of the present disclosure, the chemical formula of the coating layer can be M'µNv, wherein M' includes any one or a combination of at least two of Al, Ti, Mg, Zr, Zn, Ce, Cr and B, N is any one or a combination of at least two of O, F, B and P, wherein, 1≤µ≤3, 1≤v≤6. The type of M' in the coating layer is as same as that of M in the matrix particle. That is to say, the coating layer can include the element M in the matrix particle and the compound formed by the element N. For example, the coating layer can include at least one of halide, oxide, fluoride and phosphide containing M. In other words, the coating layer 130 does not contain Li, Ni, Co and Mn and can include substances formed by elements M and N in the matrix particle. For example, the coating layer can be in a form of at least one of fluoride and oxide, and specifically, the coating layer 130 can be AlF₃, TiO₂, Al₂O3, ZrO and the like. For example, specifically, the buffer layer and the coating layer can be same in type of metal elements, i.e., the type of metal elements in the buffer layer can be further same with the type of the metal elements contained in the coating layer in quantity. When the buffer layer contains m metal elements, the coating layer further contains m metals, and the m metals in the buffer layer and the m metal elements in the coating layer are totally same, for example, the metals can be Al, Ti or Zr simultaneously. Thus, on the one hand, the conductivity of the cathode material is improved favorably, thereby playing a role of stabilizing a cathode material/electrolyte interface and on the other hand, the coating with the compositor is better in compatibility as the coating has common element M with the buffer layer, thereby further improving the performance of the cathode material favorably.

According to the embodiments of the present disclosure, when the cathode material has the coating layer, the chemical composition of the cathode material can meet the condition:

aLi_{1+λ}Ni_{α}Mn_{β}Co_{γ}M_{(1-α-β-γ)}O₂·bM_{µ}Nᵥ,

wherein, a+b=1 , 0<a≤1, 0≤b<1, 0≤λ<0.1, 0.5≤α<1, 0.3≤β<1, 0≤γ<0.2, 0.01≤1-α-β-γ≤0.05, 1≤µ≤3, 1≤v≤6, M is selected from at least one of Al, Ti, Mg, Zr, Zn, Ce and Cr, and N is selected from at least one of O, F, B and P.

Or, the chemical composition of the cathode material can meet the condition:

aLi_{1+λ}Ni_{α}Mn_{β}Co_{γ}M_{(1-α-β-γ)}O₂·bM_{µ}Nᵥ,

wherein, a+b=1, 0<a<1, 0<b<1, 0≤λ<0.1, 0.8≤α<1, 0.01≤β<0.1, 0≤y<0.1, 1≤µ≤3, 1≤v≤6, M is selected from at least one of Al, Ti, Mg, Zr, Zn, Ce and Cr, and N is selected from at least one of O, F, B and P.

The inventors find that the cathode material formed by the monocrystal particle is also applied to the nickel cobalt lithium aluminate (LNCA) cathode material. In particular, the buffer layer and the coating layer are formed outside the matrix particle (the monocrystal particle) of the cathode material of the application, and thereby, the conductivity of the cathode material is further improved, the interface between the cathode material and the electrolyte is improved and the stability is improved. Therefore, when the cathode material is applied to the lithium ion battery, the lithium ion battery has better cycle performance.

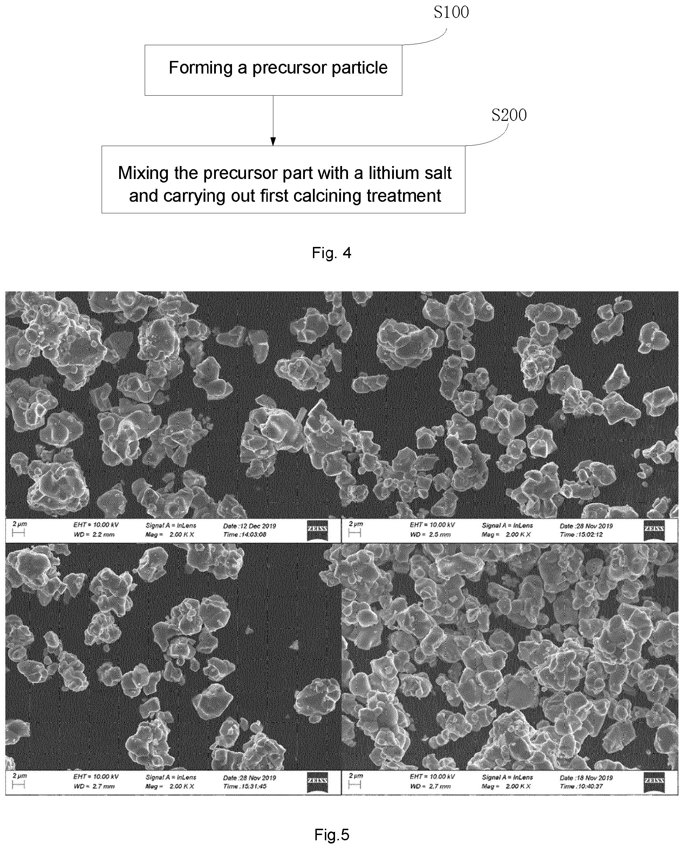

In another aspect of the present disclosure, the present disclosure provides a method for preparing the cathode material. The method is easy to operate, and the obtained cathode material has at least one of advantages of relatively high specific capacity, cycling stability, better safety performance and the like, and the buffer layer can alleviate erosion by an electrolyte and inhibit separation of active oxygen. Referring to the Fig. 4, the method includes:
S100: a precursor is obtained.

In the step, under a condition suitable for crystal growth of a precursor particle, a precursor raw material including a metal salt solution and an alkaline solution is independently injected into a closed reactor respectively to carry out coprecipitation to obtain the precursor particle. As injection of the metal salt solution and the alkaline solution is adjusted according to the crystal growth condition suitable for the precursor partial, the precursor particle obtained in the step can obtain the matrix particle with the monocrystal form by subsequent calcining treatment.

According to the embodiments of the present disclosure, the metal salt solution includes salt solutions of various metals, for example, a salt solution of nickel, a salt solution of cobalt and a salt solution of manganese. The precursor raw material further includes the M salt solution and M can include at least one of Al, Ti, Mg, Zr, Zn, Ce and Cr. The salt solutions of various metals and M are a solution of a same type salt, for example, a solution of sulfate or nitrate. Concentrations of the metal salt solution and the M salt solution and types of metal ions in various metal salt solutions can be adjusted by those skilled in the art according to the chemical composition of the cathode material formed as needed, for example, the concentrations of the various metal salt solutions can be independently 25-150 g/L respectively, for example, 60-150 g/L, specifically, 50 g/L, 70 g/L, 80 g/L, 90 g/L, 100 g/L, 120 g/L and the like or any point values within a range of 25-150 or a range formed by any two points in 25-150. Specifically, the sulfate concentration of nickel can be 150-300 g/L, the sulfate concentration of cobalt can be 10-20 g/L, the sulfate concentration of manganese can be 10-20 g/L and a salt solution concentration of M is 10-20 g/L. The concentration can be adjusted according to the chemical composition of the cathode particle prepared as needed, for example, the molar content of nickel, cobalt manganese and M in the cathode material can substantially meet the condition: the molar content of nickel is 88%, the molar content of cobalt is 6%, the molar content of manganese is 3% and the molar content of M is about 3%. Those skilled in the art can adjust the concentrations of salt solutions of nickel, cobalt, manganese and M according to the molar content. The specific types of the alkaline solutions are not limited particularly, and those skilled in the art can selected familiar alkaline solutions, for example, according to some embodiments of the present disclosure, the alkaline solutions can include an ammonia water and sodium hydroxide solution, and the concentration of the alkaline solution can be 80-240 g/L.

According to the embodiments of the present disclosure, the specific injection rates of the metal salt solution and the alkaline solution are not limited particularly, and those skilled in the art can determine and adjust the injection rates according to the volume of the reaction container, concentrations of the metal salt solutions and the alkaline solutions and the specific chemical composition of the cathode material. For example, the specific injection speeds of the metal salt solutions and the alkaline solutions, and the pH values of the solutions in the reactor in the coprecipitation reaction period are 10.5-11.9, for example, the pH value is greater than 11 but less than 12.

As previously mentioned, in the step, the metal salt solution and the alkaline solution are independently injected into the closed reactor respectively under a condition suitable for crystal growth of a precursor particle. The closed container can be a reaction kettle and the like. According to the specific embodiments of the present disclosure, the injection speed of the metal salt solution can be dynamically adjusted based on crystal growth of the precursor particle. Specifically, the time of the end of the particle growth can be speculated according to a kinetic model of crystal particle growth, and the flow rate (i.e., the injection speed) of the metal salt solution injected into the reaction kettle is adjusted, for example, the flow rate of the metal salt solution is increased or decreased in some period in crystal growth and after the crystal growth stage, the flow rate of each metal salt solution injected into the reaction kettle is then adjusted to an initial flow rate value thereof till the coprecipitation reaction is finished. Therefore, the formed precursor particle forms the matrix particle of monocrystal form via subsequent first calcining treatment, thereby finally obtaining the cathode material without a plurality of crystal boundaries internally.

It should be particularly noted herein that the salt solution can include various salt solutions, and each salt solution can have an independent initial injection speed. Increase or decrease of the injection speed means adjustment of the injection speed of each salt solution independently, respectively, i.e., the injection speed is increased or decreased relative to the initial injection speed of the salt solution, and after the crystal growth stage is finished, the injection speed of the salt solution is restored to the initial injections peed of the salt solution of the element. For example, the initial injection speed of various elements M can be equal or not equal, and the initial injection speeds of the salt solution of nickel, the salt solution of cobalt and the salt solution of manganese can be equal or not equal. However, `adjusting to the initial flow rate value' and `restoring to the initial injection speed' are related to the initial injection speeds of themselves, for example, after the crystal growth stage is finished, the injection speed of the salt solution of nickel is restored to the initial injection speed of the salt solution of nickel, the injection speed of the salt solution of cobalt is restored to the initial injection speed of the salt solution of cobalt, and the injection speed of the salt solution of manganese is restored to the initial injection speed of the salt solution of manganese.

According to the specific embodiments of the present disclosure, size distribution of the precursor particle is monitored in real time in the coprecipitation process and the injection speed of the metal salt solution is adjusted based on size distribution. For example, a part of solution can be extracted from a reaction container such as the reaction kettle periodically, and size distribution is analyzed by means of instruments including, but not limited to a laser particle size analyzer.

According to some specific examples of the present disclosure, the injection speed of the M salt solution can be increased after a first predetermined time and the injection speeds of the salt solutions of nickel, salt and manganese are reduced till the end of the crystal growth of the precursor particle. Then, the injection speeds of all the salt solutions are restored to the initial injection speeds till coprecipitation is finished. Specifically, the first predetermined time is a time when a granularity of the particle reaches 90-99% of a preset granularity of the precursor particle during the coprecipitation reaction. For example, the injection flow rates of the salt solution of nickel, the salt solution of cobalt and the salt solution of manganese are decreased independently to 30-50% of initial values of flow rates thereof, respectively after the first predetermined time, and the injection flow rates of the M salt solutions are increased to 120-140% of the initial values of the flow rates.

In the precursor particle obtained, M has a high concentration distribution zone and a low concentration distribution zone. A molar ratio of M contained in the low concentration distribution zone to M contained in the concentration distribution zone is 0.01-0.5, the low concentration distribution zone is located in the center zone and the surface layer of the precursor particle, the high concentration distribution zone is located in a range, 0.05-0.5 microns, away from the surface of the precursor particle, and a buffer layer can be formed in a subsequent step. The cathode material formed by the precursor particle with two concentration sub-zones of M can have higher stability.

According to the embodiments of the present disclosure, prior to injecting the metal salt solution, the M salt solution and the alkaline solution into the reactor, deionized water can be added into the reactor in advance and is warmed to 40-90 degrees centigrade, and the mixture is stirred at a speed of 700-1100 rmp, and the metal salt solution, the M salt solution and the alkaline solution are then injected under stirring.

According to the embodiments of the present disclosure, after the coprecipitation reaction is finished, a product in the reactor can be filtered, washed and dried in vacuum to obtain the precursor particle. Specifically, the product in the reactor can be filtered, and a filter residue is washed with deionized water and is dried for 6-12 hours in vacuum at 100-150 degrees centigrade.

The particle size range of the precursor particle obtained in the step can be 1-8 microns, the specific surface area thereof can be 5-25 m²/g and the tap density thereof is 1.1-1.9 g/cc. Therefore, the obtained precursor particle is relatively ideal, which is favorable to obtain the cathode material which is proper in particle size of the matrix and better in interfacial property by means of first calcining treatment subsequently. The chemical composition of the precursor particle obtained in the step can be:
Ni_{0.88}Co_{0.06}Mn_{0.03}Al_{0.03}(OH)₂, Ni_{0.88}Co_{0.06}Mn_{0.03}Zr_{0.03}(OH)₂, Ni_{0.88}Co_{0.06}Mn_{0.03}Ti_{0.03}(OH)₂, or Ni_{0.88}Co_{0.06}Mn_{0.03}Mg_{0.03}(OH)₂ and the like.

S200: the precursor particle is mixed with a lithium salt and first calcining treatment is carried out to obtain the cathode material.

In the step, the precursor particle is mixed with a lithium salt and first calcining treatment is carried out to obtain the cathode material.

According to the specific embodiments of the present disclosure, the specific type of the lithium salt is not limited particularly, for example, the lithium salt can be one or more of LiOH•H₂O, LiF, Li₂CO₃ and CH₃COOLi. The mixing proportion of the lithium salt and the precursor particle can be adjusted by those skilled in the art according to the chemical composition of the cathode material needed to be prepared.

According to some specific examples of the present disclosure, the calcining temperature of the first calcining treatment can be 800-880 degrees centigrade, the warming rate in the first calcining treatment process is 1.5-10 degrees centigrade/min, the first calcining treatment time is 8-25 hours and the first calcining treatment is carried out in an oxygen atmosphere.

In order to further improve the effect of the first calcining treatment, the precursor particle and the lithium salt can be ground and dried in vacuum respectively before being mixed. For example, the precursor particle and lithium salt are subjected to crushing treatment including, but not limited to grinding, respectively so as to obtain the particle with the nanoscale particle size, and then the particle is then dried in vacuum. The way of mixing the lithium salt with the precursor particle can be mixing powder by means of a mortar or is carried out by means of a high speed mixer, and the two are mixed uniformly before the first calcining treatment. Then, the cathode material can be obtained through the first calcining treatment.

According to the embodiments of the present disclosure, the method further can include a step of forming the coating layer. In the step, the cathode material is mixed with the coating agent and the mixture is subjected to second calcining treatment to form the coating layer on the surface of the matrix particle of the cathode material. Referring to structure and chemical composition of the cathode material, detailed description has been made previously, and no more detailed description will be made herein.

In order to improve the effect of the second calcining treatment, the cathode material can be successively subjected to crushing treatment, cleaning treatment and vacuum drying treatment in advance before the cathode material and the coating agent are mixed. Specifically, the cathode material can be placed in the deionized water with a certain volume to be washed with water for 3-10 min, and then the washed cathode material is dried in vacuum. Vacuum drying can be carried out at 120-180 degrees centigrade and the drying time can be 2-10 hours.

According to the embodiments of the present disclosure, the coating agent can include at least one of aluminum isopropoxide, aluminum fluoride, aluminum oxide, cerium oxide, isopropyl titanate, titanium oxide, boron oxide, boric acid, magnesium oxide, zirconium oxide, zirconium n-butoxide, ammonium fluoride, ammonium dihydrogen fluoride, ammonium monohydrogen fluoride and magnesium metaborate, and the particle size of the coating agent is not greater than 50 nm. According to some specific examples of the present disclosure, a material with the metal element in the coating agent same as the metal element M in a cathode material prefabricate (for example, metal elements expect Li, Co, Co and Ni in the cathode material) can be selected, thereby, guaranteeing batch consistence of products better.

According to the embodiments of the present disclosure, the temperature of the second calcining treatment can be 350-650 degrees centigrade, the warming rate in the second calcining treatment process is 1-5 degrees centigrade/min, the second calcining treatment time is 3-15 hours and the second calcining treatment is carried out in an oxygen atmosphere or a nitrogen atmosphere.

In one aspect of the present disclosure, the present disclosure provides a cathode. Referring to the Fig. 3, the cathode includes the cathode pole piece 200 and the cathode material 100 distributed on the cathode pole piece 200. The cathode material 100 is the above-mentioned cathode material or is prepared by the method. Therefore, the cathode has all characteristics and advantages of the above-mentioned cathode material and no more detailed description is provided herein. For example, the cathode has at least one of advantages of high stability of a cathode active material, and relatively high specific capacity, good cycle performance, better stability and the like of the lithium ion battery prepared by the cathode.

It should be particularly noted herein that the cathode further can include but not limited to structures such as a lug 210, thereby facilitating connection when a battery is formed. The structure shown in the Fig. 3 is merely convenient for depicting a position relationship of the cathode pole piece 200 and the cathode material 100 and cannot be construed as limitation to the specific position and distribution mode of the cathode material 100. For example, the cathode material 100 can be dispersed to carriers including, but not limited to an electrolyte, and is distributed to the cathode pole piece 200 by way of coating, rolling and the like.

In yet another aspect of the present disclosure, the present disclosure provides a lithium ion battery. The lithium ion battery includes the above-mentioned cathode and anode as well as a diaphragm insulating the cathode with the anode. The lithium ion battery has all characteristics and advantages of the above-mentioned cathode, and no more detailed description is provided herein. In general, the lithium ion battery has at least one of advantages of relatively high specific capacity, good cycle performance, better stability and the like.

According to the embodiments of the present disclosure, the specific type of the lithium ion battery is not limited particularly, for example, the lithium ion battery can be either a liquid electrolyte or a full-solid lithium ion battery. The lithium ion battery further can contain a plurality of independent sub batteries and has structures such as soft roll battery modules.

In one aspect of the present disclosure, the present disclosure provides a vehicle. The vehicle includes the above-mentioned lithium ion battery. Therefore, the vehicle has all characteristics and advantages of the above-mentioned lithium ion battery, and no more detailed description is provided herein. In general, the vehicle has at least one of advantages of relatively high mileage, better safety performance and stability, relatively small mileage attenuation and the like.

According to the specific embodiments of the present disclosure, the lithium ion battery can be used for driving a vehicle. The specific position of the lithium ion battery in the vehicle is not limited particularly and can be selected by those skilled in the art according to an actual condition. As the battery has better safety and stability, it is further more flexible to select the specific position of the power battery.

The scheme of the present disclosure is described below by the specific embodiments, and it should be noted that the embodiments below are merely used for explaining the present disclosure and are not to limit the scope of the present disclosure. The embodiments without specific technologies or conditions indicated are carried out according to technologies or conditions described by literature in the field or description of a product.

### Example 1

A nickel sulfate solution, a cobalt sulfate solution and a manganese sulfate solution with concentrations of about 130 g/L and an aluminum sulfate solution with concentration of about 40 g/L are prepared and an ammonia water solution with concentration of about 150 g/L and a sodium hydroxide solution with concentration of about 130 g/L are prepared. 1.1 L of deionized water is added into a reaction kettle, the reaction kettle is warmed to a constant temperature 65 °C, the pH of the reaction process is controlled at about 11.4, the whole coprecipitation reaction time is 36 hours and the stirring rate is 950 rmp. When the reaction is carried out to the 33rd hour, the feeding flow rates of nickel sulfate, cobalt sulfate and manganese sulfate solutions are decreased to 30% of initial values, and meanwhile, the feeding flow rate of the aluminum sulfate solution is increased to 120% of the initial value, and the feeding flow rate of the salt solution is regulated back to the initial value after about 40-60 min till the coprecipitation reaction is finished. The obtained material is filtered, washed with the deionized water and dried for 10 hours in vacuum at 130 degrees centigrade to obtain the precursor particle with the chemical composition of Ni_{0.88}Co_{0.06}Mn_{0.03}Al_{0.03}(OH)₂.

1 mol of precursor particle and 1.03 mol of lithium source (LiOH•H₂O) are placed in a nano grinding miller respectively, are ground according to a set program and are then dried in vacuum. The obtained two types of nano material powder are placed in the grinding miller to be mixed fully, and are then placed in an about 850-degree centigrade calcinatory to be calcined for 20 hours in a pure oxygen atmosphere at a warming rate of 6 degrees centigrade/min. The calcined powder sample is placed in the deionized water to be washed for about 10 min and is then dried in vacuum to obtain a cathode material prefabricate.

The dried cathode material prefabricate powder material is mixed with 4016 ppm AlF₃ (the particle size ≤50 nm), is then placed in a 500-degree centigrade calcinatory to be calcined for 6 hours in an oxygen atmosphere at the warming rate of 1.5- degree centigrade/min, and is finally ground fully in the mortar or crushed in an ultracentrifugal grinding crusher to obtain the cathode material. The chemical compositor of the cathode material is 0.996LiNi_{0.88}Co_{0.06}Mn_{0.03}Al_{0.03}O₂·0.004AlF₃. A scanning electron microscope picture is as shown in (a) in the Fig. 5.

### Example 2

A nickel sulfate solution, a cobalt sulfate solution and a manganese sulfate solution with concentrations of about 130 g/L and an titanium sulfate solution with concentration of about 36g/L are prepared and an ammonia water solution with concentration of about 150 g/L and a sodium hydroxide solution with concentration of about 130 g/L are prepared. 1.1 L of deionized water is added into a reaction kettle, the reaction kettle is warmed to a constant temperature 65 °C, the pH of the reaction process is controlled at about 11.5, the whole coprecipitation reaction time is 36 hours and the stirring rate is 950 rmp. When the reaction is carried out to the 33rd hour, the feeding flow rates of nickel sulfate, cobalt sulfate and manganese sulfate solutions are decreased to 30% of initial values, and meanwhile, the feeding flow rate of the titanium sulfate solution is increased to 130% of the initial value, and the feeding flow rate of the salt solution is regulated back to the initial value after about 40-60 min till the coprecipitation reaction is finished. The obtained material is filtered, washed with the deionized water and dried for 10 hours in vacuum at 130 degrees centigrade to obtain the precursor particle with the chemical formula of Ni_{0.88}Co_{0.06}Mn_{0.03}Ti_{0.03}(OH)₂.

1 mol of precursor (Ni_{0.88}Co_{0.06}Mn_{0.03}Ti_{0.03}(OH)₂) and 1.03 mol of lithium source (LiOH•H₂O) are placed in a nano grinding miller respectively, are ground according to a set program and are then dried in vacuum. The obtained two types of nano material powder are placed in the grinding miller to be mixed fully, and are then placed in an about 850-degree centigrade calcinatory to be calcined for 20 hours in a pure oxygen atmosphere at a warming rate of 6 degrees centigrade/min.

The calcined powder sample is placed in the deionized water to be washed for about 10 min and is then dried in vacuum. The dried powder material is mixed with 4016 ppm TiO₂ (the particle size ≤50 nm), is then placed in a 550-degree centigrade calcinatory to be calcined for 5.5 hours in an oxygen atmosphere at the warming rate of 1.5- degree centigrade/min, and is finally ground fully in the mortar or crushed in an ultracentrifugal grinding crusher to obtain the cathode material, the molecular formula of the cathode material being 0.996LiNi_{0.88}Co_{0.06}Mn_{0.03}Ti_{0.03}O₂·0.004TiO₂. A scanning electron microscope picture is as shown in (b) in the Fig. 5.

### Example 3

A nickel sulfate solution, a cobalt sulfate solution and a manganese sulfate solution with concentrations of about 130 g/L and an aluminum sulfate solution with concentration of about 40 g/L are prepared and an ammonia water solution with concentration of about 150 g/L and a sodium hydroxide solution with concentration of about 130 g/L are prepared. 1.1 L of deionized water is added into a reaction kettle, the reaction kettle is warmed to a constant temperature 65 °C, the pH of the reaction process is controlled at about 11.4, the whole coprecipitation reaction time is 36 hours and the stirring rate is 950 rmp. When the reaction is carried out to the 33rd hour, the feeding flow rates of nickel sulfate, cobalt sulfate and manganese sulfate solutions are decreased to 30% of initial values, and meanwhile, the feeding flow rate of the aluminum sulfate solution is increased to 120% of the initial value, and the feeding flow rate of the salt solution is regulated back to the initial value after about 40-60 min till the coprecipitation reaction is finished. The obtained material is filtered, washed with the deionized water and dried for 10 hours in vacuum at 130 degrees centigrade to obtain the precursor particle with the chemical formula of Ni_{0.88}Co_{0.06}Mn_{0.03}Al_{0.03}(OH)₂.

1 mol of precursor (Ni_{0.88}Co_{0.06}Mn_{0.03}Al_{0.03}(OH)₂) and 1.03 mol of lithium source (LiOH•H₂O) are placed in a nano grinding miller respectively, are ground according to a set program and are then dried in vacuum. The obtained two types of nano material powder are placed in the grinding miller to be mixed fully, and are then placed in an about 850-degree centigrade calcinatory to be calcined for 20 hours in a pure oxygen atmosphere at a warming rate of 6 degrees centigrade/min. The calcined powder sample is placed in the deionized water to be washed for about 10 min and is then dried in vacuum. The dried powder material is mixed with 4016 ppm Al₂O₃ (the particle size ≤ 50 nm), is then placed in a 450-degree centigrade calcinator to be calcined for 5 hours in an oxygen atmosphere at the warming rate of 2 °C/min, and is finally ground fully in the mortar or crushed in an ultracentrifugal grinding crusher to obtain the cathode material, the molecular formula of the cathode material being 0.996LiNi_{0.88}Co_{0.06}Mn_{0.03}Al_{0.03}O₂·0.004Al₂O₃. A scanning electron microscope picture is as shown in (c) in the Fig. 5.

### Example 4

A nickel sulfate solution, a cobalt sulfate solution and a manganese sulfate solution with concentrations of about 130 g/L and a zirconium sulfate solution with concentration of about 44g/L are prepared and an ammonia water solution with concentration of about 150 g/L and a sodium hydroxide solution with concentration of about 130 g/L are prepared. 1.1 L of deionized water is added into a reaction kettle, the reaction kettle is warmed to a constant temperature 65°C, the pH of the reaction process is controlled at about 11.7, the whole coprecipitation reaction time is 36 hours and the stirring rate is 950 rmp. When the reaction is carried out to the 33rd hour, the feeding flow rates of nickel sulfate, cobalt sulfate and manganese sulfate solutions are decreased to 30% of initial values, and meanwhile, the feeding flow rate of the zirconium sulfate solution is increased to 120% of the initial value, and the feeding flow rate of the salt solution is regulated back to the initial value after about 40-60 min till the coprecipitation reaction is finished. The obtained material is filtered, washed with the deionized water and dried for 10 hours in vacuum at 130 degrees centigrade to obtain the precursor particle with the chemical formula of Ni_{0.88}Co_{0.06}Mn_{0.03}Zr_{0.03}(OH)₂.

1 mol of precursor (Ni_{0.88}Co_{0.06}Mn_{0.03}Zr_{0.03}(OH)₂) and 1.03 mol of lithium source (LiOH•H₂O) are placed in a nano grinding miller respectively, are ground according to a set program and are then dried in vacuum. The obtained two types of nano material powder are placed in the grinding miller to be mixed fully, and are then placed in an about 850-degree centigrade calcinator to be calcined for 20 hours in a pure oxygen atmosphere at a warming rate of 6 degrees centigrade/min. The calcined powder sample is placed in the deionized water to be washed for about 10 min and is then dried in vacuum.

The dried powder material is mixed with 4016 ppm ZrO (the particle size ≤ 50 nm), is then placed in a 500-degree centigrade calcinatory to be calcined for 6 hours in an oxygen atmosphere at the warming rate of 1.5-degree centigrade/min, and is finally ground fully in the mortar or crushed in an ultracentrifugal grinding crusher to obtain the cathode material, the molecular formula of the cathode material being 0.996LiNi_{0.88}Co_{0.06}Mn_{0.03}Zr_{0.03}O₂·0.004ZrO. A scanning electron microscope picture is as shown in (d) in the Fig. 5.

### Comparative example 1

A nickel sulfate solution with concentration of about 290g/L, a cobalt sulfate solution with concentration of about 20g/L and a manganese sulfate solution with concentrations of about 10g/L and an aluminum sulfate solution with concentration of about 10g/L are prepared and an ammonia water solution with concentration of about 150 g/L and a sodium hydroxide solution with concentration of about 130 g/L are prepared. 1.1 L of deionized water is added into a reaction kettle, the reaction kettle is warmed to a constant temperature 70°C, the pH of the reaction process is controlled at about 11.4, the whole coprecipitation reaction time is 52 hours and the stirring rate is 960 rmp. The obtained material is filtered, washed with the deionized water and dried for 10 hours in vacuum at 130 degrees centigrade to obtain the precursor particle with the chemical composition of Ni_{0.88}Co_{0.06}Mn_{0.03}Al_{0.03}(OH)₂.

1 mol of precursor particle and 1.03 mol of lithium source (LiOH•H₂O) are placed in a nano grinding miller respectively, are ground according to a set program and are then dried in vacuum. The obtained two types of nano material powder are placed in the grinding miller to be mixed fully, and are then placed in an about 750-degree centigrade calcinatory to be calcined for 16 hours in a pure oxygen atmosphere at a warming rate of 2 degrees centigrade/min. The calcined powder sample is placed in the deionized water to be washed for about 10 min and is then dried in vacuum to obtain a cathode material prefabricate.

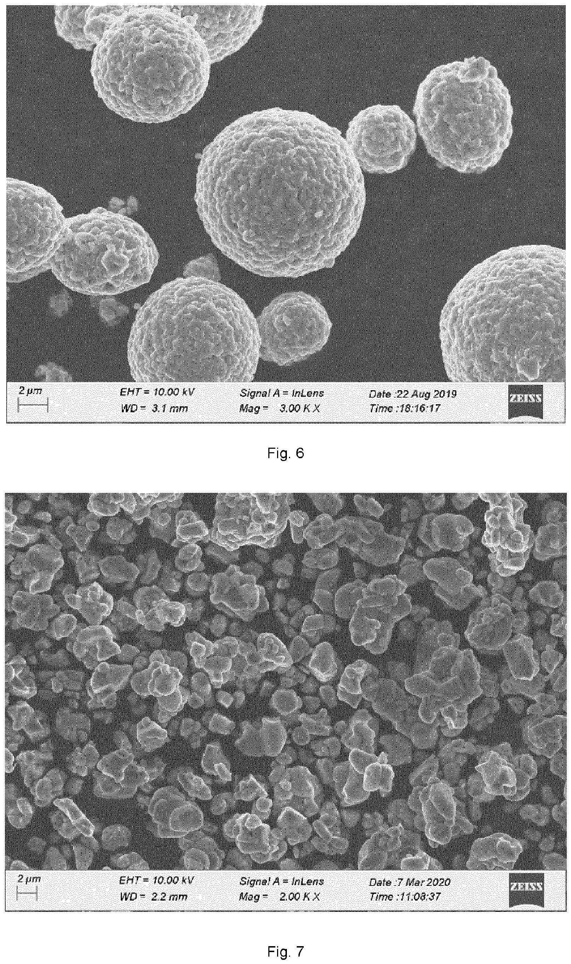

The dried cathode material prefabricate powder material is mixed with 4016 ppm AlF₃ (the particle size ≤50 nm), is then placed in a 500-degree centigrade calcinator to be calcined for 6 hours in an oxygen atmosphere at the warming rate of 1.5-degree centigrade/min, and is finally ground fully in the mortar or crushed in an ultracentrifugal grinding crusher to obtain the cathode material. The chemical compositor of the cathode material is 0.996LiNi_{0.88}Co_{0.06}Mn_{0.03}Al_{0.03}O₂·0.004AlF₃. A scanning electron microscope picture is as shown in the Fig. 6.

### Comparative example 2

A nickel sulfate solution with concentration of about 290g/L, a cobalt sulfate solution with concentration of about 20g/L and a manganese sulfate solution with concentrations of about 10g/L and an aluminum sulfate solution with concentration of about 10g/L are prepared and an ammonia water solution with concentration of about 150 g/L and a sodium hydroxide solution with concentration of about 130 g/L are prepared. 1.1 L of deionized water is added into a reaction kettle, the reaction kettle is warmed to a constant temperature 65°C, the pH of the reaction process is controlled at about 11.4, the whole coprecipitation reaction time is 36 hours and the stirring rate is 950 rmp. The obtained material is filtered, washed with the deionized water and dried for 10 hours in vacuum at 130 degrees centigrade to obtain the precursor particle with the chemical composition of Ni_{0.88}Co_{0.06}Mn_{0.03}Al_{0.03}(OH)₂.

1 mol of precursor particle and 1.03 mol of lithium source (LiOH•H₂O) are placed in a nano grinding miller respectively, are ground according to a set program and are then dried in vacuum. The obtained two types of nano material powder are placed in the grinding miller to be mixed fully, and are then placed in an about 850-degree centigrade calcinatory to be calcined for 20 hours in a pure oxygen atmosphere at a warming rate of 6 degrees centigrade/min. The calcined powder sample is placed in the deionized water to be washed for about 10 min and is then dried in vacuum to obtain a cathode material prefabricate.

The dried cathode material prefabricate powder material is mixed with 4016 ppm AlF3 (the particle size ≤ 50 nm), is then placed in a 500-degree centigrade calcinatory to be calcined for 6 hours in an oxygen atmosphere at the warming rate of 1.5- degree centigrade, and is finally ground fully in the mortar or crushed in an ultracentrifugal grinding crusher to obtain the cathode material. The chemical compositor of the cathode material is 0.996LiNi_{0.88}Co_{0.06}Mn_{0.03}Al_{0.03}O₂·0.004AlF₃.

A scanning electron microscope picture is as shown in the Fig. 7.

### Performance test:

Referring to the Fig. 5, the scanning electron microscope pictures of the cathode materials prepared in the embodiments 1-4 show characteristics of the monocrystal particle. Therefore, it is confirmed that the cathode materials prepared by the embodiments 1-4 are different from conventional polycrystal particle essentially and do not include a plurality of primary particles, such that crystal boundary shapes among the primary particles are further avoided. With increase of charge and discharge cycle times, problems of side reactions of the electrolyte and damage in structure and the like as the electrolyte enters the particle can be solved, too due to the problems of stress of crystal boundary, micro-cracks and the like. It can be confirmed by the Fig. 5 that the monocrystal particle is an independent particle without a hidden danger of damaging the crystal boundary, such that the monocrystal particle keeps the original shape relatively stably in the long-time charge and discharge cycle processes.

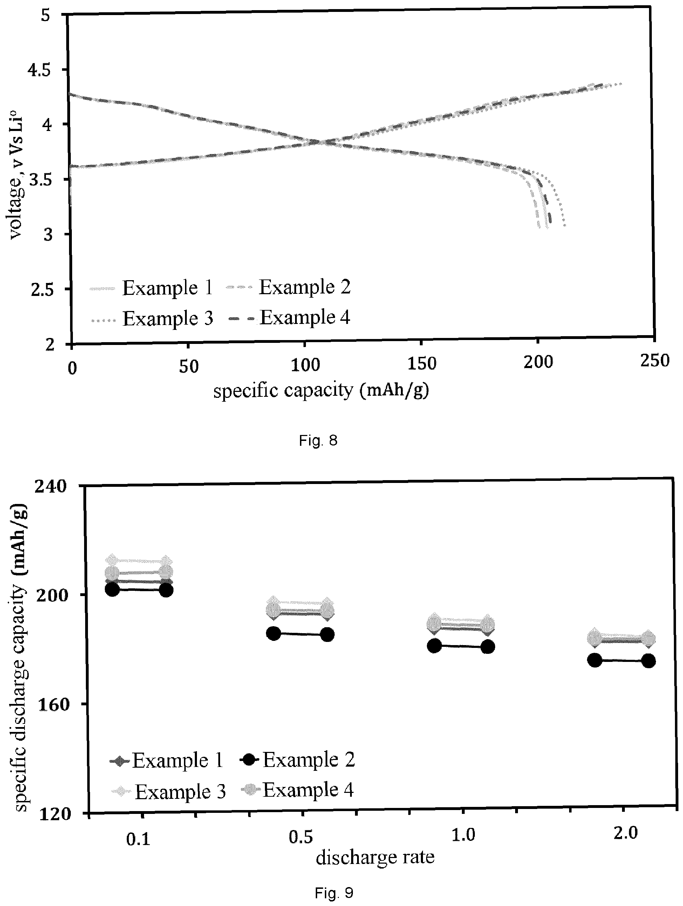

Fig. 8 is a first-time charging and discharging curve of the cathode material prepared in the embodiments 1-4. The charge and discharge rates are 0.1C/0.1C respectively and the voltage range is 3-4.3 V It can be seen from the Fig. 8 that the cathode materials prepared by the embodiments 1-4 show better first-time charging and discharging properties. The specific charge and discharge capacities are 232.1 mAh/ g and 204.6 mAh/g in sequence respectively, 225.4 mAh/g and 201.2 mAh/g respectively, 237.2 mAh/g and 212.4 mAh/g respectively, and 230 mAh/g and 206.3mAh/g, which exceed 200 mAh/g.

Fig. 9 is specific discharge capacities of the cathode materials obtained in the embodiments 1-4 under different current densities. The charge and discharge rates are 0.1C/0.1C, 0.5C/0.5C, 0.5C/1C and 0.5C/2C respectively and the voltage range is 3-4.3 V It can be known from the Fig. 9 that when the discharge rate is 1C, the specific discharge capacities corresponding to the embodiments are 186 mAh/g, 179.6 mAh/g, 189.5 mAh/g and187.5mAh/g in sequence respectively, and the rate capabilities are better.

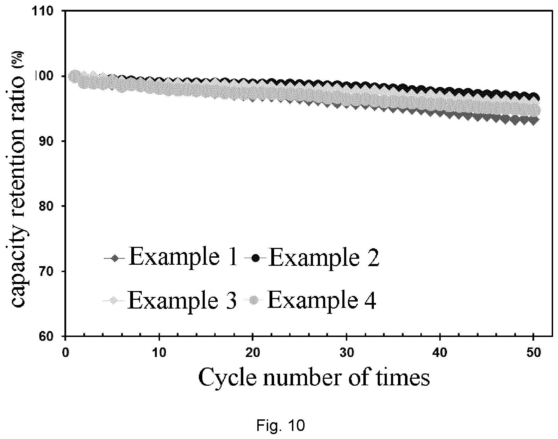

The Fig. 10 is a keeping condition of the specific discharge capacities of the cathode materials prepared in the embodiments 1-4 in 50 cycle processes, the charge rate of cyclic charge and discharge is 0.5C, the discharge rate thereof is 1C and the voltage range is 3-4.3V It can be known from the Fig. 10 that the cyclic capacity retention ratios corresponding to the embodiments are 93.3%, 96.7%, 95.8% and 94.7% in sequence, and the cyclic capacity retention ratio reaches a higher level. Thus, the buffer layer and the coating layer on the surface of the particle can enable the sample to maintain a relatively high cyclic stability, such that the crystal structure of the material is stabilized.

Through evaluation, the 0.1C rate specific charge and discharge capacities of the sample obtained in the comparative example 1 are 234.8mAh/g and 202mAh/g respectively; the first-time coulombic efficiency is 86%; the 1C rate specific discharge capacity is 173 mAh/g; and the capacity retention ratio at charge 0.5C rate and discharge 1C rate after 50 charge and discharge cycles is 91%. The 0.1C rate specific charge and discharge capacities of the sample obtained in the comparative example 2 are 233.1 mAh/g and 203.9 mAh/g respectively; the first-time coulombic efficiency is 87.4%; the 1C rate specific discharge capacity is 180 mAh/g; and the capacity retention ratio at charge 0.5C rate and discharge 1C rate after 50 charge and discharge cycles is 89%. It can be seen that the sample according to the embodiments of the present disclosure has better cycle performance.

In description of the present disclosure, orientation or position relationships indicated by terms: `inner', 'outer', `surface' and the like are orientation or position relationships indicated by the drawings and are only to describe the present disclosure and simplify the description rather than indicates or implies that the indicated device or components must have specific orientations. Therefore, it cannot be construed as limitations to the present disclosure.

In the description, description with reference to "one embodiment", "another embodiment" and the like means specific features, structures, materials or characteristics described in combination with the embodiments are included in at least one embodiment of the present disclosure. In the description, schematic expressions of the terms do not have to mean same embodiments or exemplary embodiments. Furthermore, specific features, structures, materials or characteristics described can be combined in any one or more embodiments or exemplary embodiments in proper manners. In addition, under a condition without mutual contradiction, those skilled in the art can integrate or combine different embodiments or exemplary embodiments with different embodiments or exemplary embodiments described in the description.

Although the embodiments of the present have been shown and described above, it can be understood that the embodiments are exemplary and cannot be construed as limitation to the present disclosure. Those skilled in the art can make changes, modification, replacement and transformation on the embodiments within the scope of the present disclosure.

## Claims

1. A cathode material, comprising:
a matrix particle, wherein the matrix particle is a monocrystal particle comprising nickel lithium manganate and nickel cobalt lithium manganate; a position in the matrix particle close to a surface layer is provided with a buffer layer; and a content of at least one of elements Ni, Co and Mn in the buffer layer is lower than contents thereof in other positions of the matrix particle.

2. The cathode material according to claim 1, wherein a chemical formula of the matrix particle is Li_{1+λ}NiₐMn_{β}Co_{y}M_{(1-α-β-γ)}O₂,
Wherein, 0≤λ<0.1, 0.5≤α<1, 0.3≤β<1, 0≤γ<0.2, 0.01≤1-α-β-γ≤0.05, M is selected from at least one of Al, Ti, Mg, Zr, Zn, Ce and Cr, and N is selected from at least one of O, F, B and P; and
a molar content of the element M in the buffer layer is higher than a molar content thereof in a non-buffer layer.

3. The cathode material according to claim 1, wherein a chemical formula of the matrix particle is Li_{1+λ}NiₐMn_{β}Co_{y}M_{(1-α-β-γ)}O₂,
Wherein, 0≤λ<0.1, 0.8≤α<1, 0.01≤β<0.1, 0≤γ<0.1, M is selected from at least one of Al, Ti, Mg, Zr, Zn, Ce and Cr, and N is selected from at least one of O, F, B and P; and
a molar content of the element M in the buffer layer is higher than a molar content thereof in a non-buffer layer.

4. The cathode material according to claim 2 or 3, wherein the cathode material further comprises a coating layer, the coating layer covering a surface layer of the matrix particle, the coating layer being free of Li, Ni, Co and Mn, the coating layer being M'_{µ}Nᵥ, the M' comprising any one or a combination of at least two of Al, Ti, Mg, Zr, Zn, Ce, Cr and B, N being any one or a combination of at least two of O, F, B and P, wherein, 1≤µ≤3, 1≤v≤6, and a type of M' in the coating layer is as same as a type of M in the matrix particle;
preferably, M' comprises any one or a combination of at least two of Al, Ti, Zr and Mg;
preferably, the coating layer is at least one of AlF₃, TiO₂, Al₂O₃ and ZrO; and
preferably, a thickness of the coating layer is 10-100 nm.

5. The cathode material according to claim 4, wherein the chemical formula of the matrix particle is aLi_{1+λ}Ni_{α}Mn_{β}Co_{γ}M_{(1-α-β-γ)}O₂·bM_{µ}Nᵥ, wherein a+b=1, 0<a<1, 0<b<1.

6. The cathode material according to claim 1, wherein the cathode material meets at least one of the following conditions:
a particle size of the matrix particle is 1.5-10 microns; and
the buffer layer is located in a near surface layer range 0.05-0.5 µm away from an outer surface in the matrix particle.

7. A method for preparing the cathode material according to any one of claims 1-6, comprising:
under a condition suitable for crystal growth of a precursor particle, independently injecting a precursor raw material comprising a metal salt solution and an alkaline solution into a closed reactor respectively to carry out coprecipitation to obtain the precursor particle; and
mixing the precursor particle with a lithium salt and carrying out first calcining treatment to obtain the cathode material.

8. The method according to claim 7, wherein the metal salt solution comprises a salt solution of nickel, a salt solution of cobalt and a salt solution of manganese, and the precursor raw material comprises an M salt solution, the method comprising:
after a first predetermined time, increasing an injection speed of the M salt solution and decreasing an injection speed of at least one of the salt solution of nickel, the salt solution of cobalt and the salt solution of manganese until an end of a crystal growth phase of the precursor particle, and then restoring the injection speeds of the metal salt solution and the M salt solution to an initial injection speed until the coprecipitation is finished,
M in the M salt comprises at least one of Al, Ti, Mg, Zr, Zn, Ce and Cr, and the first predetermined time is easier than the end of the crystal growth phase of the precursor particle;
preferably, the first predetermined time is a time when a granularity of the particle reaches 90-99% of a preset granularity of the precursor particle during the coprecipitation reaction;
preferably, the injection flow rates of the salt solution of nickel, the salt solution of cobalt and the salt solution of manganese are decreased independently to 30-50% of initial values of flow rates thereof, respectively;
preferably, the injection flow rate of the M salt solution is increased to 120-140% of an initial value of a flow rate thereof, respectively;
preferably, the method further comprises filtering, washing and drying a reaction product after the coprecipitation is finished;
Preferably, a granularity of the precursor is 1-8µm;
preferably, a specific surface area of the precursor is 5-25 m²/g; and
preferably, a tap density of the precursor is 1.1-1.9 g/cc.

9. The method according to claim 7 or 8, wherein the method further comprises:
mixing the cathode material with a coating agent to carry out second calcining treatment to form the coating layer, the coating agent meeting at least one of the following conditions:
the coating agent comprises at least one of aluminum isopropoxide, aluminum fluoride, aluminum oxide, cerium oxide, isopropyl titanate, titanium oxide, boron oxide, boric acid, magnesium oxide, zirconium oxide, zirconium n-butoxide, ammonium fluoride, ammonium dihydrogen fluoride, ammonium monohydrogen fluoride and magnesium metaborate; and
a particle size of the coating agent does not exceed 50 nm.

10. A cathode, comprising:
a cathode pole piece and a cathode material distributed on the cathode pole piece, the cathode material being the cathode material according to any one of claims 1-6 or being prepared by the method according to any one of claims 7-9.

11. A lithium ion battery, comprising:
the cathode according to claim 10;
an anode; and
a diaphragm, the diaphragm insulating the cathode with the anode.

12. A vehicle, comprising the lithium ion battery according to claim 11.
